# EUROPÄISCHE PATENTSCHRIFT

(11) **EP 2 427 271 B1**
(45) Veröffentlichungstag und Bekanntmachung des Hinweises auf die Patenterteilung: **04.12.2013**
(21) Anmeldenummer: 11715869.1
(22) Anmeldetag: 21.03.2011
(51) Int. Cl.: B02C 15/04, B02C 23/26

(54) **VERFAHREN ZUR VERMAHLUNG VON MAHLGUT**
METHOD FOR GRINDING MATERIAL TO BE GROUND
PROCÉDÉ DE BROYAGE DE MATIÈRE À BROYER

(30) Priorität: 23.04.2010 DE 102010018046
(43) Veröffentlichungstag der Anmeldung: 14.03.2012
(73) Patentinhaber: Loesche GmbH, 40549 Düsseldorf (DE)
(72) Erfinder: BUCHANENKO, Michael, 40822 Mettmann (DE)
(74) Vertreter: Heim, Hans-Karl
(86) Internationale Anmeldenummer: PCT/EP2011/001396
(87) Internationale Veröffentlichungsnummer: WO 2011/131278

(56) Entgegenhaltungen:
- EP-A2- 0 154 281
- WO-A1-2007/022837

## Beschreibung

Die Erfindung betrifft ein Verfahren zur Vermahlung von Mahlgut, insbesondere für die Zementindustrie, sowie Stahlindustrie, Erzindustrie, Kohlevergasungsanlagen für die Kraftwerksindustrie und chemische Industrie.

Die Erfindung ist insbesondere für Klinker/Schlacke-Mahlanlagen vorgesehen, in welchen das aufgegebene Mahlgut einem Mahl-Trocknungs-Prozess unterzogen werden muss. Die Erfindung ist auch für Rohmehl-Mahlanlagen der Zementindustrie geeignet.

Für Zement/Hüttensand-Mahlanlagen der Zementindustrie, welche im Verbund mit einem Ofenliniensystem des Klinkerbrennprozesses betrieben werden, stehen in der Regel die in einem Zement-Drehrohrofen gebildeten Abgase als Wärmequelle zur Trocknung des Mahlgutes zur Verfügung.

In DE 198 36 323 C2 sind Verbund-Mahlanlagen mit Luftstrom-Wälzmühlen für Mahl-Trocknungs-Prozesse beschrieben.

Mahl-Trocknungsanlagen ohne Fremdquellen, wie zum Beispiel Drehrohrofenabgase oder Klinkerkühlergase, benötigen geeignete Einrichtungen, beispielsweise Brenner, insbesondere Heißgaserzeuger, zur Erzeugung eines heißen Prozessgases, beispielsweise Heißluft, welches einer Mühle zur Trocknung des feuchten Mahlgutes und Abführung der Wassermenge aus dem Mahlkreislauf zugeführt wird. Nachfolgend soll der Begriff Heißgas oder Prozessgas auch Luft beziehungsweise Heißluft umfassen, und der Begriff Frischluft soll immer auch Frischgase aus anderen Prozessen einschließen, welche beispielsweise Umgebungstemperatur aufweisen.

Für Kohlemahlanlagen in der Erzindustrie, der Eisenhüttenindustrie (Hochofenprozess) und Kohlevergasung (Kraftwerke und chemische Industrie) stehen in der Mehrzahl der Fälle keine Fremdenergiequellen für den Trocknungsprozess in der Mühle zur Verfügung.

Um die Trocknung während der Vermahlung in einer vertikalen Luftstrommühle, beispielsweise einer Luftstrom-Wälzmühle zu gewährleisten und den Taupunkt des Prozessgases im Mühlenkreislauf nicht zu unterschreiten, wird bei einer Zement/Hüttensand-Mahlanlage in der Regel eine Prozessgastemperatur hinter einem Sichter von ca. 80 bis 100°C vorgesehen. Die in die Mühle tretenden heißen Gase müssen trocken genug sein, um die im Mahlgut enthaltene Feuchtigkeit aufnehmen zu können. Aus diesem Grunde ist es nicht möglich, die Prozessluft in einem geschlossenen Kreislauf zu führen, sondern es müssen dem Mahlkreislauf stetig Umgebungsluft und/oder trockene Heißgase von außen zugeführt werden. Die zugeführte Umgebungsluft und/oder die zugeführten Heißgase müssen zusammen mit der aufgenommenen Materialfeuchte am Kamin wieder abgegeben werden. Bedingt durch diese Art des Verfahrens entsteht ein großer Wärmeverluststrom, da die am Kamin abgeführten Gase etwa 80 bis 110°C aufweisen und der darin enthaltene Wärmeinhalt im Mahlsystem derzeit nicht weiter verwendet werden kann.

Die dem Mahlsystem zugeführte Umgebungsluft besteht zum einen aus Anteilen, die dem System kontrolliert zugeführt werden, etwa als Verbrennungsluft oder Frischluft, und aus Anteilen, die aufgrund von Undichtigkeiten des Systems (Falschluft) unkontrolliert in das System dringen.

Insbesondere bei Hüttensand-Mahlanlagen muss ein relativ großer Volumenstrom am Kamin abgeführt werden, um die im Aufgabematerial enthaltene Feuchtigkeit aus dem System zu entfernen. Hüttensand (granulierte Hochofenschlacke) weist nach der Granulation mit Wasser einen Feuchtegehalt um die 30% auf. Nach einer Vorentwässerung kann der Feuchtegehalt des Hüttensandes, welcher einer vertikalen Luftstrommühle zugeführt wird, noch bis zu 15% betragen.

Die dem Prozessgas beziehungsweise der Heißluft mit Hilfe eines Brenners, beispielsweise eines Heißgaserzeugers, zugeführte Wärmeenergie wird zum Großteil zur Verdampfung des im aufgegebenen Mahlgut vorhandenen Wassers benötigt. Daneben wird Wärmeenergie benötigt, um die in das Mahlsystem unerwünscht ein-tretende Falschluft von der Umgebungstemperatur auf die Mühlenaustrittstemperatur zu erwärmen, da bei dieser Temperatur die eingedrungene Falschluft über den Kamin abgeführt werden muss. Ein Teil der zugeführten Wärmeenergie ist außerdem erforderlich, um die für den Brenner benötigte Verbrennungsluft sowie die sonstige, dem System zugeführte Frischluft (Umgebungsluft) auf die Mühlenaustrittstemperatur zu erwärmen, um diese an die Umgebung über den Kamin wieder abführen zu können.

In der EP 0 154 281 A2 wird das der Mahl-Trocknung in einer Mühle dienende Heißgases nach der Staubabtrennung in einem Filter als heißes Abgas abgezweigt. Ein Teil dieses heißen Abgases wird an die Umgebung abgegeben, wahrend der andere Tell ais Mühlenumluft zum Mühleeingang geführt wird und dort die dem Prozess zugeführte Frischluft vorwärmt, bevor die Mühlenumluft zusammen mit der vorgewärmten Frischluft in den Mahlkreislauf eingeleitet werden.

Der Erfindung liegt die **Aufgabe** zugrunde, ein Verfahren zur Vermahlung von Mahlgut, insbesondere von Hüttensand, einem Hüttensand/Zement-Gemisch oder einem Zement/Additiv-Gemisch, anzugeben, welches eine verbesserte Energiebilanz und dadurch geringere Betriebskosten aufweist.

Erfindungsgemäß wird die Aufgabe durch die Merkmale des Anspruchs 1 gelöst. Zweckmäßige und vorteilhafte Ausgestaltungen sind in den abhängigen Ansprüchen und in der Figurenbeschreibung enthalten.

Die Erfindung beruht auf dem Grundgedanken, eine Energieeinsparung durch eine möglichst hohe Eintrittstemperatur der Frischluft bei möglichst geringem Feuchtegehalt zu ermöglichen.

Erfindungsgemäß wird die einem Rezirkulationsgas beziehungsweise einer Rezirkulationsluft zugeführte Frischluft (Umgebungsluft) als Prozessgas vor der Zumischung zu dem Rezirkulationsgas durch Übertragung der Wärmeenergie des an die Umgebung abzuführenden Abgases vorgewärmt. Die bisher über einen Kamin in die Umgebung abgegebene Wärme des Abgases wird somit zur Erwärmung der kontrolliert zuzuführenden Frischluft (Umgebungsluft) verwendet.

Es ist vorteilhaft, die Frischluft aus der Umgebung und das heiße Abgas des Mahlsystems nach dem Filter zur Abtrennung des Feingutes aus einem Feingut-Gas-Gemisch und einem Mühlventilator einer Einrichtung zur Übertragung der Wärmemenge des Abgases auf die Frischluft zuzuführen.

Zweckmäßigerweise ist eine derartige Einrichtung ein Gas/Gas-Wärmetauscher, in welchem die Frischluft (Umgebungsluft) und das heiße Abgas, beispielsweise im Gleichstrom, Kreuzstrom oder Gegenstrom geführt werden. Das heiße Abgas wird unter Abgabe von Wärmeenergie an die sich erwärmende Frischluft abgekühlt und gelangt danach wieder in die Abgasleitung und kann über einen Kamin mit einer geringeren Wärmemenge an die Umgebung abgegeben werden, wodurch sich die insgesamt dem Mahlsystem zuzuführende Wärmeenergie deutlich reduziert.

Die in dem Wärmeübertrager vorgewärmte Frischluft kann dem Brenner als Verbrennungsluft und/oder dem Rezirkulationsgas vor oder in der Mühle zugemischt werden.

Das erfindungsgemäße effiziente Verfahren ist besonders vorteilhaft bei Zement/Hüttensand-Mahlanlagen anzuwenden. Ein Teil des heißen Abluftstromes wird nach dem Mühlenventilator mit Hilfe wenigsten einer Regelklappe abgezweigt und dem Wärmetauscher zur Vorwärmung von Frischluft aus der Umgebung zugeführt. Die Umgebungsluft weist dabei eine durch die Umgebungsbedingungen vorgegebene Temperatur und Feuchtigkeit auf. Durch die Vorwärmung der Frischluft im Wärmetauscher steht sie dem Mahlsystem mit der Umgebungsfeuchte, jedoch bei deutlich erhöhter Temperatur zur Verfügung.

Ein wesentlicher Vorteil des erfindungsgemäßen energieeffizienten Mahlverfahrens besteht darin, dass in dem Wärmetauscher lediglich die Wärmeenergie zwischen den zwei Gasströmen der heißen Abluft und der Frischluft ausgetauscht wird, jedoch nicht die Feuchtigkeit des Abluftstromes.

Dem Brenner beispielsweise eines Heißgaserzeugers wird die vorgewärmte Frischluft als Verbrennungsluft über einen brennereigenen Frischluftventilator kontrolliert zugeführt. Vor der Mühle wird in der Rezirkulationsleitung eine Frischluftklappe vorgesehen, damit die für den Prozess notwendige zusätzliche Frischluft kontrolliert zugeführt werden kann.

Es ist von Vorteil, dass der Wärmetauscher mit geringstem Platzbedarf in die Mahlanlage integriert werden kann und es nur weniger zusätzlicher Rohrleitungen zwischen dem Brenner des Heißgaserzeugers, dem Kamin und der Rezirkulationsleitung zur Realisierung der Wärmerückgewinnungseinrichtung in der Mahlanlage bedarf.

Es ist zweckmäßig, wenn der Wärmetauscher für Kondensat aus dem Prozessgas eine Kondensatwanne aufweist, welche unterhalb des Wärmetauschers angeordnet sein kann. Das gesammelte Kondensat kann an das Abwassernetz abgegeben werden oder als Mühleneinspritzwasser wieder verwendet werden. Eine Wiederverwendung des Kondensates als Mühlenspritzwasser führt zu einer vorteilhaften Reduzierung des Wasserbedarfes der Anlage.

Das bisher beschriebene erfindungsgemäße Verfahren bezieht sich lediglich auf die Vorwärmung der dem System zugeführten Umgebungsluftmenge, was bereits zu den vorgenannten Vorteilen führt.

In einer erweiterten Variante des erfindungsgemäßen Verfahrens kann die Wärmeenergie der heißen Abluft zusätzlich benutzt werden, um einen Teil des Rezirkulationsgases durch vorgewärmte Frischluft mit der darin enthaltenen, geringen Feuchtigkeit zu ersetzen. Damit kann ein wesentlich niedrigerer Taupunkt im Prozessgaskreislauf erreicht werden, so dass die Temperatur nach der Mühle beziehungsweise dem Sichter abgesenkt werden kann, was wiederum zu einer weiteren Energieeinsparung des Mahlsystems führt.

Ein weiterer Vorteil des Ersatzes von Rezirkulationsgas durch vorgewärmte Frischluft besteht in einer Reduzierung der Feuchtigkeit des der Mühle zugeführten Heißgases. Durch den Eintritt des trockneren Gases in die Mühle entsteht ein verbesserter Stoffübergang des im Aufgabemahlgut enthaltenen Wassers in die Gasphase. Hierdurch bedingt kann die Mühleneintrittstemperatur des Gases abgesenkt werden, was nochmalig zu einer Reduzierung des Energiebedarfes führt. Da bekanntermaßen die Dichte eines feuchten Gases geringer ist als die eines trockenen Gases, erhöht sich die Tragfähigkeit des Gases für den Mahlguttransport. Dadurch kann der durch die Mühle zu führende Gasstrom mengenmäßig abgesenkt werden. Vorteile ergeben sich auch durch eine verbesserte Laufruhe der Mühle. Im Extremfall ist es möglich, das Rezirkulationsgas komplett durch vorgewärmte Frischluft (Umgebungsluft) zu ersetzen, so dass die Rezirkulationsleitung komplett entfallen kann.

Ein weiterer Vorteil des Systems ergibt sich dann, wenn es gelingt, die bisher unkontrolliert ins System eindringende Falschluft zu reduzieren, denn dann wäre es möglich, auch diese Umgebungsluft kontrolliert und vorgewärmt über den Wärmetauscher dem System zuzuführen.

Die Erfindung wir nachstehend anhand eines Ausführungsbeispiels weiter erläutert. Die zugehörige Zeichnungsfigur zeigt ein Flowsheet einer Mahlanlage mit einer Mühle 3, einem Sichter 5, einem Filter 7 und einem nachgeschalteten Mühlenventilator 8 sowie mit einem Heißgaserzeuger 18 zur Erzeugung von Heißgas 4 beziehungsweise Heißluft.

Bei der Mühle 3 handelt es sich um eine vertikale Luftstrommühle 13 mit einem integrierten Sichter 5. Heißgas 4 beziehungsweise Heißluft wird als Prozessgas dem Mahlraum der Mühle 3 zugeführt, um feuchtes Mahlgut 2, beispielsweise Hüttensand oder ein Hüttensand/Zement-Gemisch oder ein Zement/Additive-Gemisch während der Vermahlung zu trocknen. Ein Staub-Gas-Gemisch 6 gelangt in einer Verbindungsleitung aufgrund des vom Mühlenventilator 8 erzeugten Unterdrucks nach der Mühle 3 mit Sichter 5 in das Filter 7, wo das Feingut abgetrennt und danach das heiβe Abgas 9 über den Mühlenventilator 8 einem Kamin 21 zur Abführung an die Umgebung zugeführt wird. Zement kann hierbei auch Zementklinker sein.

Ein Teil des heißen Abgases beziehungsweise der heißen Abluft 9 wird aus der Abgasleitung abgezweigt und als Rezirkulationsgas 11 einer Einrichtung 18 zur Erhitzung, beispielsweise einem Heißgaserzeuger, zugeführt.

Gemäß dem erfinderischen Gedanken der Reduzierung des Energiebedarfes wird ein vorgebbarer Anteil des heißen Abgasstromes 9 vor dem Kamin einem Wärmetauscher 10 zugeführt. In den Wärmetauscher 10 wird Frischluft 12 aus der Umgebung geführt, so dass eine Übertragung der Wärmeenergie von der heißen Abluft 9 auf die Frischluft 12 erfolgt, welche dann als vorgewärmte Frischluft 16 dem Brenner-Verbrennungsluft-Ventilator 19 als Verbrennungsluft 17 zugeführt und außerdem über eine Regulierungs- bzw. Frischluftklappe 20 dem erhitzten Rezirkulationsgas 11 nach dem Heißgaserzeuger 18, jedoch vor der Mühle 3 zugemischt wird. Es sei darauf hingewiesen, dass es für den erfinderischen Gedanken unerheblich ist, wie und in welcher Art der Heißgaserzeuger an den Mahlkreislauf angeschlossen ist. Maßgeblich ist lediglich, dass die dem Heißgaserzeuger zugeführte Luft in einem Wärmetauscher vorgewärmt wird. Eine Zuführung der vorgewärmten Frischluft 16 über die Regelklappe 20 ist ebenfalls vor dem Heißgaserzeuger 18 in die Rezirkulationsleitung 11 möglich.

Da die heiße Abluft 9 insbesondere bei unterschiedlichen Mengen nicht in allen Betriebzuständen durch den Wärmetauscher 10 geführt werden kann, wird neben einer Regelklappe 14 in der Abluftleitung zum Kamin 21 eine weitere Regelklappe 15 in einer Zuführleitung für einen abgezweigten Abluftstrom 9 angeordnet. Beide Klappen 14, 15 sind parallel geschaltet, so dass der Druckverlust nicht erhöht wird.

Dem Brenner 22 am Heißgaserzeuger 18 wird die vorgewärmte Frischluft 16 über einen brennereigenen Frischluftventilator 19 zugeführt.

Es sei nochmals darauf hingewiesen, dass es sich bei dem dargestellten Flowsheet lediglich um eine Schaltungsmöglichkeit der Anlage handelt. Maßgeblich für den erfinderischen Gedanken ist es, dass bei Zement/Hüttensand-Mahlanlagen ein Teil oder auch sämtliche Umgebungsluft, die dem Mahlkreislauf zugeführt wird, vorher in einem Wärmetauscher 10 vorgewärmt wird.

In einem Fallbeispiel wurde der Luftstrom-Wälzmühle 13 Hüttensand als Mahlgut 2 mit einem Wassergehalt von 12% und einer Temperatur von 10°C zugeführt. Als Einrichtung 18 zur Erwärmung der der Luftstrom-Wälzmühle 13 zuzuführenden Heißluft 4 wurde ein Heißgaserzeuger 18 in der Rezirkulationsleitung liegend betrachtet. Gemäß Wärmebilanz waren 46.879 m³/h Frischluft 12 zuzuführen. Der gesamte zuzuführende Wärmestrom betrug 43,03 GJ/h. Der am Kamin abzuführende Abluftstrom betrug ohne Wärmerückgewinnung beziehungsweise das beschriebene, neue Verfahren 142.946 m³/h bei einer Temperatur von 98,2°C und einem Taupunkt von 58,1°C.

Mit einem als Kreuzstrom-Plattenwärmeaustauscher ausgebildeten Wärmetauscher 10 zur Energiereduzierung aus dem an die Umgebung abzuführenden heißen Abgas 9 wurde die Frischluft 12 von einer Eintrittstemperatur vor dem Wärmetauscher 10 von 10°C auf 82,1°C nach dem Wärmetauscher 10 vorgewärmt. An Abgas 9 wurden lediglich 100.440 m³ benötigt, welche von 98,2°C auf 88,9°C abgekühlt wurden. Der restliche Abluftstrom 9 wurde im Kamin 21 gebypasst. Mit der auf 82,1°C vorgewärmten Frischluft 16 wurde der im Heißgaserzeuger 18 zu erzeugende Wärmestrom auf 38,62 GJ/h abgesenkt, was bei Einsatz von Schweröl als Brennstoff des Brenners 22 des Heißgaserzeugers 18 zu einer Brennstoffreduzierung von etwa 110 kg/h und somit zu einer Einsparung von etwa 20.000,- € pro Monat führt.

Mit dem erfindungsgemäßen effizienten Mahlverfahren mit Einsatz eines Wärmetauschers kann mit einem relativ geringen investitionstechnischen Aufwand eine erhebliche Energieeinsparung und damit eine Senkung der Betriebkosten bei der Vermahlung feuchten Mahlguts erreicht werden.

Die Erfindung ist nicht auf eine Mahl-Trocknung mit einer vertikalen Luftstrommühle begrenzt, sondern auch für Mahlprozesse mit anderen Mühlentypen, beispielsweise Walzen-Schüsselmühlen, Rohrmühlen und/oder zweistufigen Mahlprozessen mit einem im Kreislauf geführten, heißen Prozessgas geeignet. Vorteilhafte Verwendungen des Verfahrens sind neben der Zementindustrie mit Hüttensand/Zement- und Rohmehl-Vermahlung auch Kohlemahlanlagen in der Erz- und Hüttenindustrie und die Kohlevergasung.

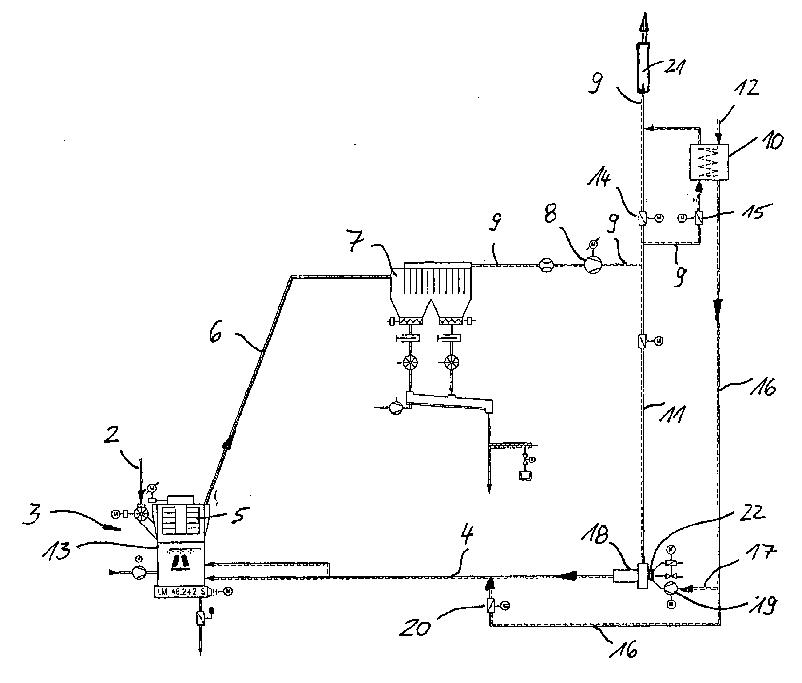

## Patentansprüche

1. Verfahren zur Vermahlung von Mahlgut, insbesondere für die Zementindustrie, bei welchem das Mahlgut (2) in einer Mühle (3) unter Zufuhr eines Heißgases (4) einer Mahl-Trocknung unterzogen, gesichtet und als Staub-Gas-Gemisch (6) einem Filter (7) zur Staubabtrennung zugeführt wird, und
bei welchem das Heißgas (4) nach dem Filter (7) und einem Mühlenventilator (8) als heißes Abgas (9) abgezweigt und über einen Kamin (21) an die Umgebung abgegeben wird, während ein Teil des heißen Abgases (9) als Rezirkulationsgas (11) nach Zumischung von Frischluft oder anderen Prozessgasen (12) der Mühle (3) wieder zugeführt wird, wobei
ein Teil oder die gesamte dem Prozess zugeführte Frischluft oder andere Prozessgase (12) vor Aufgabe in den Mahlkreislauf, insbesondere vor der Zumischung zu dem Rezirkulationsgas (11) vorgewärmt wird, **dadurch gekennzeichnet,**
**dass** zur Vorwärmung der Frischluft oder der anderen Prozessgase (12) wenigstens ein Teil oder auch das gesamte dem Kamin (21) zuzuführende, heiße Abgas (9) verwendet wird und
**dass** das heiße, zur Vorwärmung der Frischluft oder der anderen Prozessgase (12) verwendete Abgas (9) mit einer geringeren Temperatur über den Kamin (21) an die Umgebung abgegeben wird.

2. Verfahren nach Anspruch 1,
**dadurch gekennzeichnet,**
**dass** die Frischluft oder die anderen Prozessgase (12) und das heiße Abgas (9) einer Einrichtung (10) zur Übertragung der Wärmeenergie des heißen Abgases (9) auf die Frischluft oder die anderen Prozessgase (12) zugeführt werden.

3. Verfahren nach Anspruch 1 oder 2,
**dadurch gekennzeichnet,**
**dass** die Frischluft oder die anderen Prozessgase (12) und das heiße Abgas (9) einem Wärmetauscher (10) zugeführt und im Gleichstrom, Kreuzstrom oder Gegenstrom geführt und erwärmt beziehungsweise abgekühlt werden.

4. Verfahren nach einem der vorhergehenden Ansprüche,
**dadurch gekennzeichnet,**
**dass** als Mahlgut (2) Zementklinker und/oder Additive und/oder Hüttensand in einer Luftstrom-Wälzmühle (13) einer Mahl-Trocknung unterworfen werden, dass als Heißgas Heißluft (4) zugeführt wird, und
**dass** ein Teil des heißen Abluftstromes (9) nach dem Mühlenventilator (8) mit Hilfe von wenigstens einer Regelklappe (14, 15) abgezweigt und dem Wärmetauscher (10) zur Vorwärmung von Frischluft (12), welche als Umgebungsluft eine durch die Umgebungsbedingungen vorgegebene Temperatur und Feuchtigkeit aufweist, zugeführt wird.

5. Verfahren nach Anspruch 4,
dass ein regelbarer Frischluft-Volumenstrom (12) dem Wärmetauscher (10) zugeführt und darin vorgewärmt wird, und
dass die vorgewärmte Frischluft (16) einer Einrichtung (18) zur Erhitzung der Rezirkulationsluft (11) als Verbrennungsluft (17) zugeführt und/oder der Rezirkulationsluft (11) nach oder vor der Einrichtung (18) zugemischt wird.

6. Verfahren nach Anspruch 4 oder 5,
**dadurch gekennzeichnet,**
**dass** wenigstens ein Teil des heißen Abluftstroms (9) mit Hilfe von zwei Regelklappen (14, 15), welche parallel geschaltet sind, abgezweigt und dem Wärmetauscher (10) zugeführt wird.

7. Verfahren nach einem der Ansprüche 4 bis 6,
**dadurch gekennzeichnet,**
**dass** als Einrichtung zur Erhitzung der Rezirkulationsluft (11) ein Heißgaserzeuger (18) mit einem Brenner (22) verwendet wird, welchem die vorgewärmte Frischluft (16) als Verbrennungsluft (17) über einen brennereigenen Frischluftventilator (19) zugeführt wird.

8. Verfahren nach einem der Ansprüche 4 bis 7,
**dadurch gekennzeichnet,**
**dass** als Wärmetauscher (10) ein Rotorwärmetauscher mit Speichermedium oder ein Plattenwärmetauscher verwendet und anfallendes Kondensat aus dem Abluftgas (9) unterhalb des Wärmetauschers (10) gesammelt wird.

9. Verfahren nach Anspruch 8,
**dadurch gekennzeichnet,**
**dass** das gesammelte Kondensat an das Abwassersystem abgegeben oder als Mühlen-Einspritzwasser weiter verwendet wird.

10. Verfahren nach einem der vorhergehenden Ansprüche,
**dadurch gekennzeichnet,**
**dass** zur Absenkung des Taupunktes und der Temperatur des Heißgases (6) nach dem Sichter (5) und/oder zur Absenkung des Feuchtegehaltes des Gases (4) vor der Mühle (3) das Rezirkulationsgas (11) teilweise durch die im Wärmetauscher (10) vorgewärmte Frischluft (16) ersetzt wird.

11. Verfahren nach einem der vorhergehenden Ansprüche,
**dadurch gekennzeichnet,**
**dass** das Heißgas beziehungsweise die Heißluft (4) der Mühle (3, 13) mit einer Temperatur > 150°C zugeführt wird

12. Verfahren nach einem der vorhergehenden Ansprüche,
**dadurch gekennzeichnet,**
**dass** Frischluft (12), welche dem Wärmetauscher (10) mit einer Umgebungstemperatur von etwa 10°C und einem relativen Feuchtegehalt von etwa 70% zugeführt wird, auf eine Temperatur von etwa 80°C und einem relativen Feuchtegehalt von 1 % vorgewärmt und gleichzeitig die Abluft (9) im Wärmetauscher (10) von etwa 109°C auf ca. 90°C abgekühlt wird.

13. Verfahren nach einem der vorhergehenden Ansprüche,
**dadurch gekennzeichnet,**
**dass** die in Folge des in Mühle (3), Sichter (5), Filter (7) und Verbindungsleitungen herrschenden Unterdrucks eindringende Falschluft zumindest teilweise durch vorgewärmte Frischluft (16) ersetzt wird.

## Claims

1. Method for comminution of mill feed, in particular for the cement industry, wherein the mill feed (2) is subjected to a grinding-drying in a mill (3) with supply of a hot gas (4), is classified and fed as dust-gas mixture (6) to a filter (7) for dust separation, and
wherein after the filter (7) and a mill fan (8) the hot gas (4) is branched off as hot exhaust gas (9) and discharged via a flue (21) to the environment, while a portion of the hot exhaust gas (9) is fed back to the mill (3) as recirculation gas (11) after mixing-in of fresh air or other process gases (12),
wherein a portion of, or all, the fresh air or other process gases (12) fed to the process is/are preheated before being fed into the grinding circuit, in particular before admixing to the recirculation gas (11),
**characterised in that**
for the preheating of the fresh air or the other process gases (12) at least a portion of, or all, the hot exhaust gas (9) to be fed to the flue (21) is used and the hot exhaust gas (9) used for preheating the fresh air or the other process gases (12) is discharged at a lower temperature to the environment via the flue (21) .

2. Method according to claim 1,
**characterised in that**
the fresh air or the other process gases (12) and the hot exhaust gas (9) are fed to a device (10) for transfer of the heat energy of the hot exhaust gas (9) to the fresh air or the other process gases (12).

3. Method according to claim 1 or 2,
**characterised in that**
the fresh air or the other process gases (12) and the hot exhaust gas (9) are fed to a heat exchanger (10) and conveyed in parallel flow, cross flow or counter flow and heated or cooled.

4. Method according to one of the preceding claims,
**characterised in that**
cement clinker and/or additives and/or granulated blast furnace slag as mill feed (2) is/are subjected to a grinding-drying in an air swept roller mill (13), hot air (4) is supplied as hot gas, and
a portion of the hot exhaust air flow (9) is branched off after the mill fan (8) using at least one regulating damper (14, 15) and fed to the heat exchanger (10) for preheating of fresh air (12) which has as ambient air a temperature and moisture determined by the ambient conditions.

5. Method according to claim 4,
**characterised in that**
a controllable fresh air volume flow (12) is fed to the heat exchanger (10) and preheated therein, and
the preheated fresh air (16) is fed to a device (18) for heating the recirculation air (11) as combustion air (17) and/or admixed to the recirculation air (11) after or before the device (18).

6. Method according to claim 4 or 5,
**characterised in that**
at least a portion of the hot exhaust air flow (9) is branched off using two regulating dampers (14, 15) which are connected in parallel and is fed to the heat exchanger (10).

7. Method according to one of the claims 4 to 6,
**characterised in that**
as device for heating the recirculation air (11) a hot gas generator (18) with a burner (22) is used, to which the preheated fresh air (16) is fed as combustion air (17) via a burner-own fresh air fan (19).

8. Method according to one of the claims 4 to 7,
**characterised in that**
as heat exchanger (10) a rotor heat exchanger with storage medium or a plate heat exchanger is used and condensate arising is collected from the exhaust air (9) below the heat exchanger (10).

9. Method according to claim 8,
**characterised in that**
the condensate collected is discharged to the waste water system or reused as mill injection water.

10. Method according to one of the preceding claims,
**characterised in that**
in order to reduce the dew point and the temperature of the hot gas (6) after the classifier (5) and/or to reduce the moisture content of the gas (4) before the mill (3) the recirculation gas (11) is partially replaced by the fresh air (16) preheated in the heat exchanger (10).

11. Method according to one of the preceding claims,
**characterised in that**
the hot gas or the hot air (4) is fed to the mill (3, 13) with a temperature > 150°C.

12. Method according to one of the preceding claims,
**characterised in that**
fresh air (12) which is fed to the heat exchanger (10) with an ambient temperature of approximately 10°C and a relative moisture content of approximately 70% is preheated to a temperature of approximately 80°C and a relative moisture content of 1% and simultaneously the exhaust air (9) is cooled in the heat exchanger (10) from approximately 109°C to approximately 90°C.

13. Method according to one of the preceding claims,
**characterised in that**
the false air penetrating as a consequence of the underpressure prevailing in the mill (3), classifier (5), filter (7) and connection lines is replaced at least partially by preheated fresh air (16).

## Revendications

1. Procédé de broyage de matière à broyer, en particulier pour l'industrie du ciment,
dans lequel la matière à broyer (2) dans un broyeur (3) est soumise à un séchage de la matière broyée par apport d'un gaz chaud (4), triée, et acheminée en tant que mélange (6) de poussière et de gaz jusqu'à un filtre (7) pour la séparation de la poussière, et
dans lequel le gaz chaud (4) est dérivé après le filtre (7) et un ventilateur de broyeur (8), en tant que gaz d'évacuation chaud (9), puis envoyé par l'intermédiaire d'une cheminée (21) dans l'atmosphère ambiante, pendant qu'une partie du gaz d'évacuation chaud (9) est, en tant que gaz recyclé (11), à nouveau acheminée jusqu'au broyeur (3) après mélange avec de l'air frais ou un autre gaz de processus (12),
et dans lequel une partie ou la totalité de l'air frais ou de l'autre gaz de processus (12) acheminé pour le processus est préchauffée avant le passage dans le circuit de broyage, en particulier avant le mélange avec le gaz recyclé (11),
**caractérisé :**
**en ce que**, pour le préchauffage de l'air frais ou de l'autre gaz de processus (12), au moins une partie ou bien la totalité du gaz d'évacuation chaud (9) devant être conduit vers la cheminée (21) est utilisée, et
**en ce que** le gaz d'évacuation chaud (9) utilisé pour le préchauffage de l'air frais ou de l'autre gaz de processus (12) est envoyé avec une température plus faible, par l'intermédiaire de la cheminée (21), dans l'atmosphère ambiante.

2. Procédé selon la revendication 1,
**caractérisé :**
**en ce que** l'air frais ou l'autre gaz de processus (12) et le gaz d'évacuation chaud (9) sont acheminés jusqu'à un dispositif (10) destiné au transfert de l'énergie thermique du gaz d'évacuation chaud (9) à l'air frais ou à l'autre gaz de processus (12).

3. Procédé selon la revendication 1 ou 2,
**caractérisé :**
**en ce que** l'air frais ou l'autre gaz de processus (12) et le gaz d'évacuation chaud (9) sont acheminés jusqu'à un échangeur de chaleur (10) et circulent selon un courant de même sens, un courant croisé ou un courant contraire, et sont réchauffés ou respectivement refroidis.

4. Procédé selon une des revendications précédentes,
**caractérisé :**
**en ce que**, en tant que matière à broyer (2), des scories de ciment et/ou un additif et/ou du laitier granulé sont soumis à un séchage de la matière broyée dans un broyeur à rouleaux à flux d'air (13),
**en ce que** de l'air chaud (4) est acheminé en tant que gaz chaud, et
**en ce qu'**une partie du flux d'air d'évacuation chaud (9) est, après le ventilateur de broyeur (8), dérivée à l'aide d'au moins un volet de réglage (14, 15) et acheminée jusqu'à l'échangeur de chaleur (10) pour le préchauffage de l'air frais (12), qui, en tant qu'air de l'atmosphère ambiante, présente une température et une humidité prédéterminées par les conditions ambiantes.

5. Procédé selon la revendication 4,
**caractérisé :**
**en ce qu'**un flux de volume d'air frais réglable (12) est acheminé jusqu'à l'échangeur de chaleur (10) et y est préchauffé, et
**en ce que** l'air frais préchauffé (16) est, en tant qu'air de combustion (17), acheminé jusqu'à un dispositif (18) destiné au chauffage de l'air de recyclage (11) et/ou mélangé à l'air de recyclage (11) après ou avant le dispositif (18).

6. Procédé selon la revendication 4 ou 5,
**caractérisé :**
**en ce qu'**au moins une partie du flux d'air d'évacuation chaud (9) est dérivée à l'aide de deux volets de réglage (14, 15), qui sont couplés en parallèle, et acheminée jusqu'à l'échangeur de chaleur (10).

7. Procédé selon une des revendications 4 à 6,
**caractérisé :**
**en ce qu'**un générateur de gaz chaud (18) équipé d'un brûleur (22) est utilisé en tant que dispositif destiné au chauffage de l'air de recyclage (11), générateur auquel est acheminé l'air frais préchauffé (16) en tant qu'air de combustion (17), par l'intermédiaire d'un ventilateur d'air frais (19) spécifique pour le brûleur.

8. Procédé selon une des revendications 4 à 7,
**caractérisé :**
**en ce qu'**un échangeur de chaleur à rotor avec support de stockage ou un échangeur de chaleur à plaques est utilisé en tant qu'échangeur de chaleur (10), et le condensat produit à partir de l'air d'évacuation (9) est recueilli au-dessous de l'échangeur de chaleur (10).

9. Procédé selon la revendication 8,
**caractérisé :**
**en ce que** le condensat recueilli est envoyé au système des eaux usées, ou bien à nouveau utilisé comme eau injectée dans le broyeur.

10. Procédé selon une des revendications précédentes,
**caractérisé :**
**en ce que**, en vue d'une réduction du point de rosée et de la température du gaz chaud (6) en aval du dispositif de séparation (5) et/ou en vue d'une réduction de la teneur en humidité du gaz (4) en amont du broyeur (3), le gaz recyclé (11) est en partie remplacé par l'air frais (16) préchauffé dans l'échangeur de chaleur (10).

11. Procédé selon une des revendications précédentes,
**caractérisé :**
**en ce que** le gaz chaud ou respectivement l'air chaud (4) est acheminé jusqu'au broyeur (3, 13) à une température supérieure à 150°C.

12. Procédé selon une des revendications précédentes,
**caractérisé :**
**en ce que** l'air frais (12), qui est acheminé jusqu'à l'échangeur de chaleur (10) à une température ambiante de 10°C environ et avec une teneur relative en humidité de 70 % environ, est préchauffé à une température de 80°C environ et avec une teneur relative en humidité de 1 % environ et, en même temps, l'air d'évacuation (9) est refroidi de 109°C environ jusqu'à 90°C environ dans l'échangeur de chaleur (10).

13. Procédé selon une des revendications précédentes,
**caractérisé :**
**en ce que** l'air indésirable qui pénètre, en raison de la dépression qui y règne, dans le broyeur (3), le dispositif de séparation (5), le filtre (7) et les canalisations de raccordement, est remplacé au moins en partie par de l'air frais préchauffé (16).
